(19) Europäisches Patentamt
European Patent Office
Office européen des brevets

(11) **EP 4 675 101 A1**

(12) **EUROPEAN PATENT APPLICATION**
published in accordance with Art. 153(4) EPC

(43) Date of publication:
**07.01.2026 Bulletin 2026/02**

(21) Application number: **24785962.2**

(22) Date of filing: **08.08.2024**

(51) International Patent Classification (IPC):
**F03D 9/25** (2016.01)   **A01K 61/00** (2017.01)

(52) Cooperative Patent Classification (CPC):
**F03D 9/257;** F03D 9/18; F05B 2240/95;
Y02E 10/72; Y02E 10/727

(86) International application number:
**PCT/CN2024/110613**

(87) International publication number:
**WO 2025/236431 (20.11.2025 Gazette 2025/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.05.2024 CN 202410616558**

(71) Applicant: **China Three Gorges Corporation
Wuhan, Hubei 430014 (CN)**

(72) Inventors:
• **HU, Yue**
  **Wuhan, Hubei 430010 (CN)**
• **ZHOU, Chaohui**
  **Wuhan, Hubei 430010 (CN)**
• **LIU, Yuce**
  **Wuhan, Hubei 430010 (CN)**
• **WANG, Meng**
  **Wuhan, Hubei 430010 (CN)**
• **JIN, Heping**
  **Wuhan, Hubei 430010 (CN)**
• **LUO, Huiheng**
  **Wuhan, Hubei 430010 (CN)**

(74) Representative: **Groth & Co. KB
P.O. Box 6107
102 32 Stockholm (SE)**

(54) **OFFSHORE WIND POWER SYSTEM AND OPERATION METHOD THEREOF**

(57)    The present application relates to the technical field of offshore wind power, discloses an offshore wind power system and an operation method thereof, and the system comprises: an offshore wind turbine, an offshore data center, an offshore ranch, an offshore platform, submarine cables and a shore station; wherein the offshore wind turbine and the offshore platform are arranged above a sea level, the offshore ranch is arranged in seawater, and the offshore data center is arranged on a seabed; the offshore wind turbine, the offshore data center and the offshore ranch are interconnected by cables in a wind turbine sleeve; the offshore platform, the shore station and the wind turbine sleeve are interconnected by the submarine cables; wherein, the offshore wind turbine is configured to supply power to the offshore data center and the offshore ranch, and transmit surplus power to the shore station through the offshore platform; the surplus heat of equipment of the offshore data center is configured to supply heat for the offshore ranch. The present application improves the energy utilization efficiency of the offshore wind power, the utilization efficiency of sea area, and the high-efficiency environmental control for the offshore ranch.

Fig. 2

## Description

The present application claims the priority of Chinese patent application filed to CNIPA on May 17, 2024 with the application number of 202410616558.6 and the invention name of " offshore wind power system and operation method thereof", the entire contents of which are incorporated herein by reference.

## Technical field

The present application relates to the technical field of offshore wind power, in particular relates to an offshore wind power system and an operation method thereof.

## Technical background

At present, offshore wind power is in the stage of rapid development and has become a key component in the field of clean energy. Offshore wind power technology is gradually maturing, the project scale thereof is expanding, and the cost thereof is gradually decreasing, which has promoted its wide application in the global scale.

However, the offshore wind power system faces the following two major problems: the first problem is about the electricity consumption of offshore wind power, wherein, offshore wind farms are usually far away from land, so it is technically difficult to transport power back to land and connect it to the power grid, at the same time, due to the unstable power generation of offshore wind power, it also brings certain difficulties to the dispatching and trading of the power market, and the wind abandonment rate is a major problem; the second problem is about sea resources, because the construction of offshore wind farms needs to occupy a certain sea area, and the utilization of sea areas involves many aspects, such as fishery, shipping, ecological protection, etc., only construct an offshore wind power plant in a certain sea area would make the utilization efficiency of sea resources therein low, so the competition for sea resources because of offshore wind power plants has become one of the major bottlenecks in the development of offshore wind power.

## Summary of the invention

In view of this, the present application provides an offshore wind power system and operation method thereof to solve the problems of electricity consumption and sea area resource utilization associated with offshore wind power systems.

In a first aspect, the present application provides an offshore wind power system, which comprises an offshore wind turbine, an offshore data center, an offshore ranch, an offshore platform, submarine cables and a shore station; wherein the offshore wind turbine and the offshore platform are arranged above a sea level, the offshore ranch is arranged in seawater, and the offshore data center is arranged on a seabed; the offshore wind turbine, the offshore data center and the offshore ranch are interconnected by cables in a wind turbine sleeve; the offshore platform, the shore station and the wind turbine sleeve are interconnected by the submarine cables; wherein,

the offshore data center is configured to supply heat for the offshore ranch by utilizing surplus heat of equipment;
the offshore wind turbine is configured to supply power to the offshore data center and the offshore ranch, and transmit surplus power to the shore station through the offshore platform.

According to the offshore wind power system provided by the embodiments of the present application, the offshore wind turbine, the offshore data center and the offshore ranch are interconnected by cables in the wind turbine sleeve, and thus the offshore data center, the offshore ranch and the offshore wind power facilities share platform and infrastructure, so that the construction cost is reduced to the greatest extent, and the resource utilization rate and economic benefits are improved; moreover, the offshore data center, as a major power consumer, absorbs the offshore wind power locally, thereby realizing the value transition from electric power to computing power, so as to deliver green computing power to coastal areas, and at the same time, the surplus heat generated by the offshore data center can supply heat for the offshore ranch, in combination with the electricity generated by the offshore wind turbine, so that high-efficiency environmental control for the offshore ranch can be realized, and energy utilization efficiency can be improved; secondly, the offshore wind turbine and the offshore platform are arranged above the sea level, the offshore ranch is arranged in seawater, and the offshore data center is arranged on the seabed, which can realize changing the utilization of the sea area from the "flat" era into the "three-dimensional" era, realize the multi-purpose usage of one sea area, and maximize the utilization efficiency of the sea area.

In an optional embodiment, the system further comprises a power generation source;
wherein the power generation source is connected to the offshore platform and the wind turbine sleeve by the submarine cables, and is configured to supply power to the offshore data center and the offshore ranch when a wind power generated by the offshore wind turbine is less than a sum of a power consumption of the offshore data center and a total power consumption of the offshore ranch.

The offshore wind power system provided by this embodiment takes the power generation source as a backup power supply, which ensures the normal operation of the offshore data center and the offshore ranch.

In an optional embodiment, the system further comprises an energy storage device;
wherein the energy storage device is arranged in the wind turbine sleeve and connected to the offshore wind turbine and the offshore data center by cables, and is configured to store the surplus heat of the offshore data center and store the surplus power of the offshore wind turbine.

The offshore wind power system provided by this embodiment realizes the storage of surplus heat and surplus power by means of the energy storage device, thus reducing waste of resources.

In an optional embodiment, the offshore wind turbine is further configured to convert an output power thereof into heat so as to supply supplemental heat to the offshore ranch when an amount of surplus heat generated by the offshore data center is less than an amount of heat supply required by the offshore ranch.

The offshore wind power system provided by this embodiment converts the power output by the offshore wind turbine into heat so as to supply supplemental heat to the offshore ranch, thus realizing local consumption of electric power and local utilization of waste heat, thereby improving the energy utilization efficiency.

In an optional embodiment, the offshore platform comprises a substation, a data center relay station and a transport ship docking station;

the substation is configured to transmit power between the offshore wind turbine and the shore station;
the data center relay station is configured to transmit equipment data between the offshore data center and the shore station;
the transport ship docking station is configured to transport aquatic products of the offshore ranch to the outside.

In the offshore wind power system provided by this embodiment, the arrangement of the substation, the data center relay station and the transport ship docking station meets the connection requirements of the power transmitted from wind power generation, the network of the offshore data center 102 and the aquatic products produced by the offshore ranch for connecting to the shore station.

In an optional embodiment, the offshore platform further comprises a maintenance station;
the maintenance station is configured to provide a maintenance platform for the offshore wind turbine, the offshore data center and the offshore ranch.

The offshore wind power system provided by this embodiment meets the maintenance requirements of the offshore wind turbine, the offshore data center and the offshore ranch by means of the maintenance station.

In a second aspect, the present application provides an operation method of an offshore wind power system, applied by the offshore wind power system of the first aspect and any one of its corresponding embodiments, wherein the method comprises:

acquiring a wind power of an offshore wind turbine, a power consumption of equipment of an offshore ranch, an amount of heat supply required by the offshore ranch, a power consumption of an offshore data center and a surplus heat coefficient of the offshore data center;
calculating an amount of surplus heat generated by the offshore data center based on the power consumption of the offshore data center and the surplus heat coefficient of the offshore data center;
comparing the amount of heat supply required by the offshore ranch with the amount of surplus heat generated by the offshore data center, and determining a total power consumption of the offshore ranch based on a comparison result thereof;
comparing the wind power of the offshore wind turbine with a sum of the power consumption of the offshore data center and the total power consumption of the offshore ranch, and supplying power to the offshore ranch and the offshore data center based on a comparison result thereof.

In the operation method of the offshore wind power system provided by the embodiments of the present application, by comparing the amount of heat supply required by the offshore ranch with the amount of surplus heat generated by the offshore data center, and comparing the wind power generated by the offshore wind turbine with the sum of the power consumption of the offshore data center and the total power consumption of the offshore ranch, the surplus heat generated by the offshore data center can be utilized to supply heat to the offshore ranch, in combination with the electricity generated by the offshore wind turbine, so that high-efficiency environmental control for the offshore ranch can be realized, and energy utilization efficiency can be improved.

In an optional embodiment, the step of comparing the amount of heat supply required by the offshore ranch with the amount of surplus heat generated by the offshore data center, and determining a total power consumption of the offshore ranch based on a comparison result thereof comprises:

if the amount of heat supply required by the offshore ranch is greater than or equal to the amount of surplus heat generated by the offshore data center, calculating the total power consumption of the offshore ranch based on the power consumption of equipment of the offshore ranch, the amount of heat supply required by the offshore ranch and the amount of surplus heat generated by the offshore data center;
or, if the amount of heat supply required by the offshore ranch is less than the amount of surplus heat generated by the offshore data center, taking the power consumption of equipment of the offshore ranch as the total power consumption of the offshore ranch.

In an optional embodiment, the step of comparing the amount of heat supply required by the offshore ranch with the amount of surplus heat generated by the offshore data center, and determining a total power consumption of the offshore ranch based on a comparison result thereof further comprises:

if the amount of heat supply required by the offshore ranch is less than the amount of surplus heat generated by the offshore data center, providing heat to the offshore ranch by the offshore data center, and storing the surplus heat generated by the offshore data center into an energy storage device.

In an optional embodiment, the step of supplying power to the offshore ranch and the offshore data center based on a comparison result thereof comprises:

if the wind power generated by the offshore wind turbine is greater than or equal to a sum of the power consumption of the offshore data center and the total power consumption of the offshore ranch, supplying power to the offshore data center and the offshore ranch by the offshore wind turbine, and calculating an amount of surplus power based on the wind power generated by the offshore wind turbine and the sum of the power consumption of the offshore data center and the total power consumption of the offshore ranch, and transmitting the surplus power to the shore station through the offshore platform;

or, if the wind power generated by the offshore wind turbine is less than the sum of the power consumption of the offshore data center and the total power consumption of the offshore ranch, supplying power to the offshore data center and the offshore ranch by the shore station through the offshore platform.

**Brief description of appended drawings**

In order to explain the technical solutions in the specific embodiments of the present application or in the prior art more clearly, the appended drawings needed for describing the specific embodiments or the prior art will be briefly introduced below. Apparently, the appended drawings described below only represent some embodiments of the present application. For a person skilled in the art, other drawings can be obtained according to these appended drawings without expenditure of creative labor.

Fig. 1 is a schematic structural diagram of an offshore wind power system according to an embodiment of the present application;
Fig. 2 is a structural block diagram of an offshore wind power system according to an embodiment of the present application;
Fig. 3 is a structural block diagram of an offshore platform according to an embodiment of the present application;
Fig. 4 is a flowchart of an operation method of an offshore wind power system according to an embodiment of the present application;
Fig. 5 is a flowchart of another operation method of an offshore wind power system according to an embodiment of the present application;
Fig. 6 is a flowchart of an operation method of an offshore wind power system integrating an offshore ranch and an offshore data center according to an embodiment of the present application.

**Detailed description**

In order to make the objectives, technical schemes and advantages of the embodiments of the present application clearer, hereinafter, the technical schemes in the embodiments of the present application will be described clearly and completely with reference to the appended drawings. Apparently, the described embodiments only represent part of the embodiments of the present application, not all of them. Based on the embodiments described in the present application, all other embodiments obtainable by those skilled in the art without expenditure of creative labor belong to the protection scope of the present application.

The embodiments provide an offshore wind power system, which is used to implement the above-mentioned embodiments and optional embodiments, and what has been described above is not repeated herein. As used below, the term "module" may be a combination of software and/or hardware that implements a predetermined function. Although the devices described in the following embodiments are preferably implemented in software, the implementation by hardware, or by a combination of software and hardware, is also possible and contemplated.

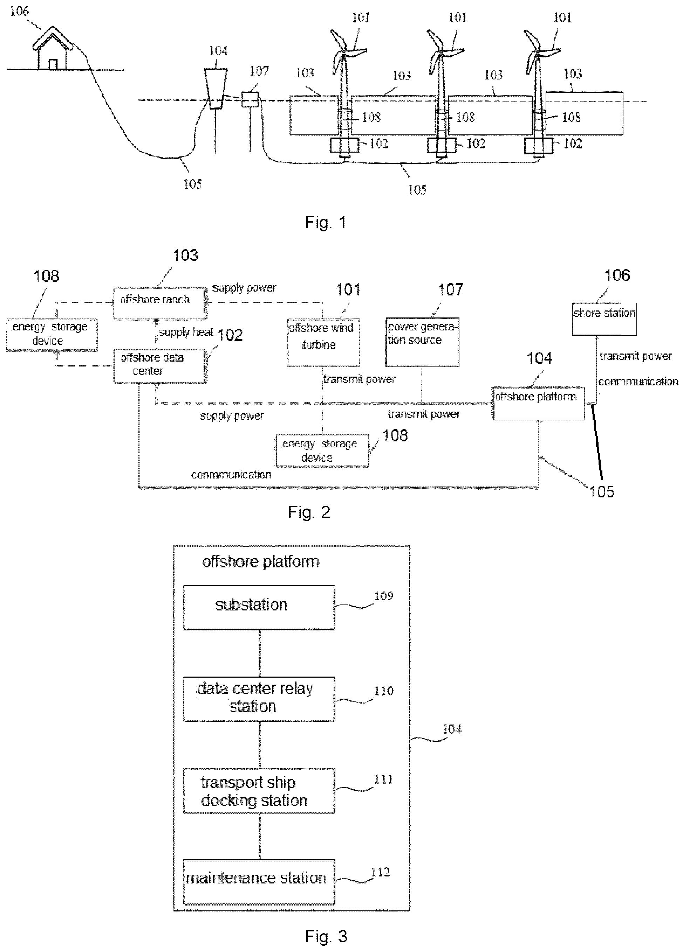

This embodiment provides an offshore wind power system, as shown in Figs. 1-2, the system comprises an offshore wind turbine 101, an offshore data center 102, an offshore ranch 103, an offshore platform 104, submarine cables 105 and a shore station 106; The offshore wind turbine 101 and the offshore platform 104 are arranged above a sea level, the offshore ranch 103 is arranged in seawater, and the offshore data center 102 is arranged on a seabed. The offshore wind turbine 101, the offshore data center 102 and the offshore ranch 103 are interconnected by cables in a wind turbine sleeve; the offshore platform 104, the shore station 106 and the wind turbine sleeve are interconnected by the submarine cables 105; wherein,

the offshore data center 102 is configured to supply heat for the offshore ranch 103 by utilizing surplus heat of equipment.
the offshore wind turbine 101 is configured to supply power to the offshore data center 102 and the offshore ranch 103, and transmit surplus power to the shore station 106 through the offshore platform 104.

Specifically, the offshore wind turbine 101, the offshore data center 102, an energy storage device and the offshore ranch 103 share a fixed infrastructure to save the construction cost, and the above-mentioned devices do not need to be interconnected by submarine cables 105, but only need to be interconnected by cables in the wind turbine sleeve; the submarine cables 105 are only laid between the fixed infrastructure, a power generation source, the offshore platform 104 and the shore station 106.

Optionally, the shore station 106 carries facilities such as electric power equipment, network communication equipment, central monitoring equipment, etc., and plays a role of connecting with the power grid and network on shore.

In the offshore wind power system provided by the embodiments of the present application, the offshore wind turbine, the offshore data center and the offshore ranch are interconnected by cables in the wind turbine sleeve, wherein the offshore data center, as a major power consumer, absorbs the offshore wind power locally, thereby realizing the value transition from electric power to computing power, so as to deliver green computing power to coastal areas, and at the same time, the surplus heat generated by the offshore data center can supply heat for the offshore ranch, in combination with the electricity generated by the offshore wind turbine, so that high-efficiency environmental control for the offshore ranch can be realized, and energy utilization efficiency can be improved; moreover, the offshore wind turbine and the offshore platform are arranged above the sea level, the offshore ranch is arranged in seawater, and the offshore data center is arranged on the seabed, which can realize changing the utilization of the sea area from the "flat" era into the "three-dimensional" era, realize the multi-purpose usage of one sea area, and maximize the utilization efficiency of the sea area.

In some optional embodiments, the system further comprises a power generation source 107;
The power generation source 107 is connected to the offshore platform 104 and the wind turbine sleeve by the submarine cables 105, and is configured to supply power to the offshore data center 102 and the offshore ranch 103 when the wind power generated by the offshore wind turbine 101 is less than a sum of the power consumption of the offshore data center 102 and the total power consumption of the offshore ranch 103.

Specifically, if the power generated by the offshore wind turbine 101 is insufficient to meet the power supply requirements for the offshore data center 102 and the offshore ranch 103, the onshore power grid of the shore station 106 supplies power through the offshore platform 104 to make up for it; and if the shore station 106 cannot supply power, the offshore data center 102 and the offshore ranch 103 are supplied with power by the power generation source 107.

The offshore wind power system provided by this embodiment takes the power generation source as a backup power supply, which ensures the normal operation of the offshore data center and the offshore ranch.

In some optional embodiments, the system further comprises an energy storage device 108;
the energy storage device 108 is arranged in the wind turbine sleeve and connected to the offshore wind turbine 101 and the offshore data center 102 by cables, and is configured to store the surplus heat of the offshore data center 102 and the surplus power of the offshore wind turbine 101.

Specifically, the energy storage device 108 connected to the offshore data center 102 and the offshore wind turbine 101 is used to store surplus heat or surplus power, so as to shave peaks and fill valleys.

The offshore wind power system provided by this embodiment realizes the storage of surplus heat and surplus power by means of the energy storage device, thus reducing waste of resources.

In some optional embodiments, the offshore wind turbine 101 is also configured to convert an output power thereof into heat so as to supply supplemental heat to the offshore ranch 103 when an amount of surplus heat generated by the offshore data center 102 is less than an amount of heat supply required by the offshore ranch 103.

Specifically, the heat supply required by the offshore ranch 103 is mainly supplied by the equipment waste heat generated by the offshore data center 102, and any insufficient part thereof is supplemented by the output power of the offshore wind turbine 101 converted into heat.

The offshore wind power system provided by this embodiment converts the power output by the offshore wind turbine into heat so as to supply supplemental heat to the offshore ranch, thus realizing local consumption of electric power and local utilization of waste heat, thereby improving the energy utilization efficiency.

In some optional embodiments, as shown in Fig. 3, the offshore platform 104 comprises a substation 109, a data center relay station 110 and a transport ship docking station 111;

the substation 109 is configured to transmit power between the offshore wind turbine 101 and the shore station 106;
the data center relay station 110 is configured to transmit equipment data between the offshore data center 102 and the shore station 106;
the transport ship docking station 111 is configured to transport aquatic products of the offshore ranch 103 to the outside.

Specifically, the offshore data center 102 is connected with the offshore platform 104 by the submarine cables 105, and is thereby connected with the network of the shore station 106 to provide computing services to the outside world.

In the offshore wind power system provided by this embodiment, the arrangement of the substation, the data center relay station and the transport ship docking station meets the connection requirements of the power transmitted from wind power generation, the network of the offshore data center 102 and the aquatic products produced by the offshore ranch for connecting to the shore station.

In some optional embodiments, the offshore platform 104 further comprises a maintenance station 112;

the maintenance station 112 is configured to provide a maintenance platform for the offshore wind turbine 101, the offshore data center 102 and the offshore ranch 103.

Specifically, the maintenance station is also configured to provide a maintenance platform for the power generation source 107 and the energy storage device 108.

The offshore wind power system provided by this embodiment meets the maintenance requirements of the offshore wind turbine, the offshore data center and the offshore ranch by means of the maintenance station.

According to the embodiments of the present application, an embodiment of an operation method of an offshore wind power system is provided. It should be noted that the steps shown in the flowchart of the appended drawings can be executed in a computer system such as by means of a set of computer-executable instructions, and although the logical sequence is shown in the flowchart, in some cases, the steps shown or described may be executed in a sequence different from that shown or described herein.

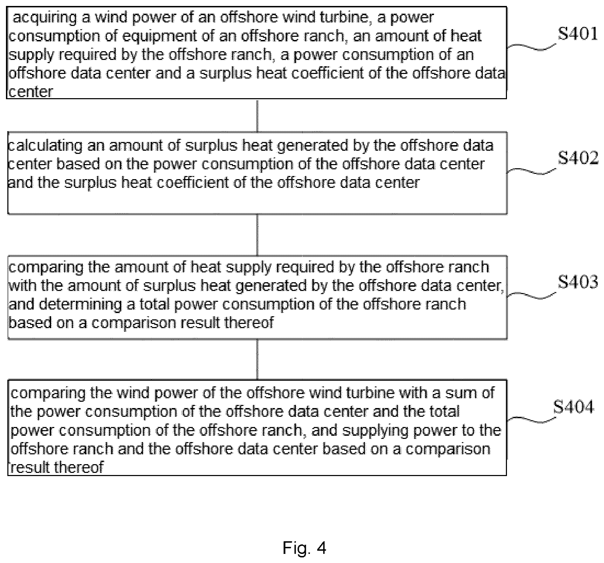

In this embodiment, an operation method of an offshore wind power system is provided, which can be applied by the above-mentioned offshore wind power system. Fig. 4 is a flow chart of the operation method of an offshore wind power system according to this embodiment of the present application, as shown in Fig. 4, a process of the method comprises the following steps:

Step S401: acquiring a wind power of an offshore wind turbine, a power consumption of equipment of an offshore ranch, an amount of heat supply required by the offshore ranch, a power consumption of an offshore data center and a surplus heat coefficient of the offshore data center.

Step S402: calculating an amount of surplus heat generated by the offshore data center based on the power consumption of the offshore data center and the surplus heat coefficient of the offshore data center.

Specifically, a product of the power consumption of the offshore data center and the surplus heat coefficient of the offshore data center is taken as the surplus heat generated by the offshore data center.

Step S403, comparing the amount of heat supply required by the offshore ranch with the amount of surplus heat generated by the offshore data center, and determining a total power consumption of the offshore ranch based on a comparison result thereof.

Step S404, comparing the wind power of the offshore wind turbine with a sum of the power consumption of the offshore data center and the total power consumption of the offshore ranch, and supplying power to the offshore ranch and the offshore data center based on a comparison result thereof.

According to the operation method of the offshore wind power system provided by this embodiment, by comparing the amount of heat supply required by the offshore ranch with the amount of surplus heat generated by the offshore data center, and comparing the wind power generated by the offshore wind turbine with the sum of the power consumption of the offshore data center and the total power consumption of the offshore ranch, the surplus heat generated by the offshore data center can be utilized to supply heat to the offshore ranch, in combination with the electricity generated by the offshore wind turbine, so that high-efficiency environmental control for the offshore ranch can be realized, and energy utilization efficiency can be improved.

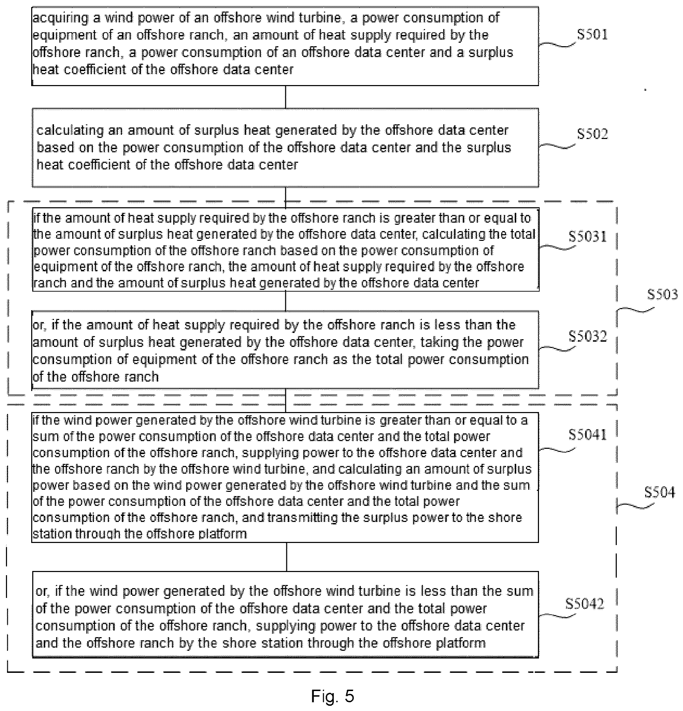

In this embodiment, an operation method of an offshore wind power system is provided, which can be applied by the above-mentioned offshore wind power system. Fig. 5 is a flow chart of the operation method of an offshore wind power system according to this embodiment of the present application, as shown in Fig. 5, a process of the method comprises the following steps:

Step S501: acquiring a wind power of an offshore wind turbine, a power consumption of equipment of an offshore ranch, an amount of heat supply required by the offshore ranch, a power consumption of an offshore data center and a surplus heat coefficient of the offshore data center. Please refer to step S401 of the embodiment shown in Fig. 4 for details, which will not be repeated herein.

Step S502: calculating an amount of surplus heat generated by the offshore data center based on the power consumption of the offshore data center and the surplus heat coefficient of the offshore data center. Please refer to step S402 of the embodiment shown in Fig. 4 for details, which will not be repeated herein.

Step S503: comparing the amount of heat supply required by the offshore ranch with the amount of surplus heat generated by the offshore data center, and determining a total power consumption of the offshore ranch based on a comparison result thereof.

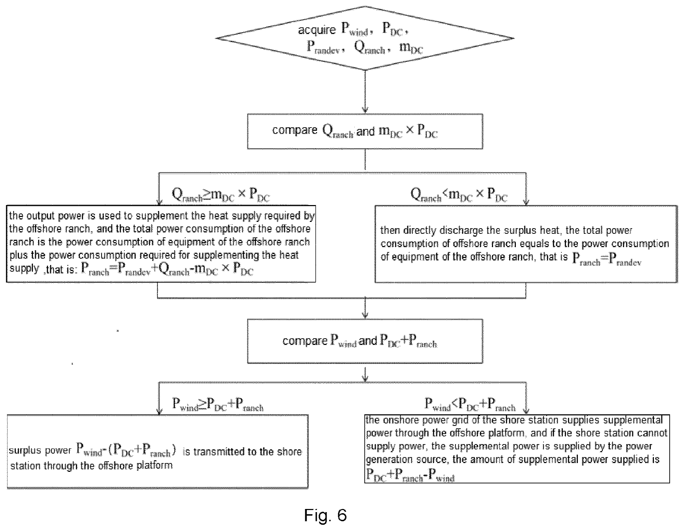

Specifically, as shown in Fig. 6, the above step S503 comprises:

Step S5031, if the amount of heat supply required by the offshore ranch is greater than or equal to the amount of surplus heat generated by the offshore data center, calculating the total power consumption of the offshore ranch based on the power consumption of equipment of the offshore ranch, the amount of heat supply required by the offshore ranch and the amount of surplus heat generated by the offshore data center.

Specifically, if $Q_{ranch} \geq m_{DC} \times P_{DC}$, the output power of offshore wind turbines is used to supplement the heat supply required by the offshore ranch, and the total power consumption of the offshore ranch is the power consumption of equipment of the offshore ranch plus the power consumption required for supplementing the heat supply. The calculation formula of the total power consumption of the offshore ranch is as follows:

$$P_{ranch}=P_{randev}+Q_{ranch}-m_{DC} \times P_{DC} \quad (1)$$

Wherein, $P_{ranch}$ represents a total power consumption of the offshore ranch, $P_{randev}$ represents a power consumption of equipment of the offshore ranch, $Q_{ranch}$ represents an amount of heat supply required by the offshore ranch, $m_{DC}$ represents the surplus heat coefficient of the offshore data center, and $P_{DC}$ represents a power consumption of the offshore data center.

Step S5032, or, if the amount of heat supply required by the offshore ranch is less than the amount of surplus heat generated by the offshore data center, taking the power consumption of equipment of the offshore ranch as the total power consumption of the offshore ranch.

Specifically, if $Q_{ranch} < m_{DC} \times P_{DC}$, the total power consumption of offshore ranch can be expressed as:

$$P_{ranch}=P_{randev} \quad (2)$$

Optionally, if the amount of heat supply require by the offshore ranch is less than the amount of surplus heat generated by the offshore data center, the offshore ranch is provided with heat by the offshore data center, and meanwhile the surplus heat generated by the offshore data center is stored into an energy storage device.

Step S504: comparing the wind power of the offshore wind turbine with a sum of the power consumption of the offshore data center and the total power consumption of the offshore ranch, and supplying power to the offshore ranch and the offshore data center based on a comparison result thereof.

Specifically, as shown in Fig. 6, the above step S504 comprises:
Step S5041: if the wind power generated by the offshore wind turbine is greater than or equal to a sum of the power consumption of the offshore data center and the total power consumption of the offshore ranch, supplying power to the offshore data center and the offshore ranch by the offshore wind turbine, and calculating an amount of surplus power 'based on the wind power generated by the offshore wind turbine and the sum of the power consumption of the offshore data center and the total power consumption of the offshore ranch, and transmitting the surplus power to the shore station through the offshore platform.

Specifically, if $P_{wind} \geq P_{DC}+P_{ranch}$, after supplying power to the offshore data center and the offshore ranch by the offshore wind turbine, the surplus power thereof will be transmitted to the shore station through the offshore platform. The calculation formula of the surplus power $P_{surplus}$ is as follows:

$$P_{surplus}=P_{wind}-(P_{DC}+P_{ranch}) \quad (3)$$

In the above formula, $P_{wind}$ represents an amount of wind power generated by the offshore wind turbine, and $P_{DC}$ represents the power consumption of the offshore data center.

Step S5042, or, if the wind power generated by the offshore wind turbine is less than the sum of the power consumption of the offshore data center and the total power consumption of the offshore ranch, supplying power to the offshore data center and the offshore ranch by the shore station through the offshore platform.

Specifically, if $P_{wind} < P_{DC}+P_{ranch}$, the onshore power grid of the shore station supplies supplemental power through the offshore platform; and if the shore station cannot supply power, the offshore data center and offshore ranch are supplied with power by the power generation source.

The operation method of the offshore wind power system provided by the embodiments of the present application compares the amount of heat supply required by the offshore ranch with the amount of surplus heat generated by the offshore data center, and compares the wind power generated by the offshore wind turbine with the sum of the power consumption of the offshore data center and the total power consumption of the offshore ranch, and determines a way of supplying heat to the offshore ranch by utilizing heat from the offshore data center based on the comparison results thereof, thus improving the energy utilization efficiency and economic benefits. The offshore wind turbine supplements the surplus heat required by the offshore ranch, and supplies electric power to the offshore data center and the offshore ranch, thereby realizing local consumption of electric power and local utilization of waste heat.

A person skilled in the art can be aware of that the units and algorithm steps of various examples described in connection with the embodiments disclosed herein can be implemented in electronic hardware, or a combination of computer software and electronic hardware. Whether these functions are implemented in hardware or software depends on the specific application and design constraints of the technical scheme. Professionals can use different ways to implement the described functions for each specific application, but such implementation should not be considered as beyond the scope of the embodiments of the present application.

It can be clearly understood by those skilled in the art that, for the convenience and conciseness of description, the specific working processes of the systems, devices and units described above can refer to the corresponding processes in the aforementioned method embodiments, and will not be repeated herein.

In several embodiments provided by the embodiments of the present application, it should be understood that the disclosed systems, devices and methods can be realized in other ways. For example, the device embodiments described above are only schematic. For example, the division of units is only a logical function division. In actual implementation, there may be other division ways, such as multiple units or components can be combined or integrated into another system, or some features can be omitted or not executed. On the other hand, the mutual coupling or direct coupling or communication connection shown or discussed may also be indirect coupling or communication connection through some interfaces, devices or units, which may be in electrical, mechanical or other forms.

The units described as separate components may or may not be physically separated, and a component displayed as a unit may or may not be a physical unit, that is, its parts may be located in one place or distributed into multiple network units. Some or all of the units may be selected according to actual needs to achieve the objective of the embodiments.

In addition, each functional unit in each embodiment of the present application may be integrated into one processing unit, or each unit can exist physically alone, or two or more units may be integrated into one unit.

Functions may be stored in a computer-readable storage medium if they are realized in the form of software functional units and sold or used as an independent product. Based on this understanding, the technical solution of the embodiments of the present application, or the part thereof that makes a contribution to the prior art, may be embodied in the form of a software product, which is stored in a storage medium and includes a plurality of instructions to make a computer device (which may be a personal computer, a server, a network device, etc.) execute all or part of the steps of the methods of the embodiments of the present application. The aforementioned storage medium includes: U disk, portable hard disk, Read-Only Memory (ROM), Random Access Memory (RAM), magnetic disk or optical disk, and other media that can store program codes.

Although the embodiments of the present application have been described in connection with the appended drawings, those skilled in the art can make various modifications and variations without departing from the spirit and scope of the present application, and such modifications and variations are all within the scope defined by the appended claims.

**Claims**

1. An offshore wind power system, comprising an offshore wind turbine, an offshore data center, an offshore ranch, an offshore platform, submarine cables and a shore station; wherein the offshore wind turbine and the offshore platform are arranged above a sea level, the offshore ranch is arranged in seawater, and the offshore data center is arranged on a seabed; the offshore wind turbine, the offshore data center and the offshore ranch are interconnected by cables in a wind turbine sleeve; the offshore platform, the shore station and the wind turbine sleeve are interconnected by the submarine cables; wherein,

   the offshore data center is configured to supply heat for the offshore ranch by utilizing surplus heat of equipment;
   the offshore wind turbine is configured to supply power to the offshore data center and the offshore ranch, and transmit surplus power to the shore station through the offshore platform.

2. The system according to claim 1, further comprising: a power generation source; wherein the power generation source is connected to the offshore platform and the wind turbine sleeve by the submarine cables, and is configured to supply power to the offshore data center and the offshore ranch when a wind power generated by the offshore wind turbine is less than a sum of a power consumption of the offshore data center and a total power consumption of the offshore ranch.

3. The system according to claim 1, further comprising: an energy storage device; wherein the energy storage device is arranged in the wind turbine sleeve and connected to the offshore wind turbine and the offshore data center by cables, and is configured to store the surplus heat of the offshore data center and store the surplus power of the offshore wind turbine.

4. The system according to claim 1, wherein the offshore wind turbine is further configured to convert an output power thereof into heat so as to supply supplemental heat to the offshore ranch when an amount of surplus heat generated by the offshore data center is less than an amount of heat supply required by the offshore ranch.

5. The system according to claim 4, wherein the offshore platform comprises: a substation, a data center relay station and a transport ship docking station;

   the substation is configured to transmit power between the offshore wind turbine and the shore station;
   the data center relay station is configured to transmit equipment data between the offshore data center and the shore station;
the transport ship docking station is configured to transport aquatic products of the offshore ranch to the outside.

6. The system according to claim 5, wherein the offshore platform further comprises: a maintenance station;
the maintenance station is configured to provide a maintenance platform for the offshore wind turbine, the offshore data center and the offshore ranch.

7. An operation method of an offshore wind power system, applied by the offshore wind power system according to any one of claims 1 to 6, wherein the method comprises:

acquiring a wind power of an offshore wind turbine, a power consumption of equipment of an offshore ranch, an amount of heat supply required by the offshore ranch, a power consumption of an offshore data center and a surplus heat coefficient of the offshore data center;
calculating an amount of surplus heat generated by the offshore data center based on the power consumption of the offshore data center and the surplus heat coefficient of the offshore data center;
comparing the amount of heat supply required by the offshore ranch with the amount of surplus heat generated by the offshore data center, and determining a total power consumption of the offshore ranch based on a comparison result thereof;
comparing the wind power of the offshore wind turbine with a sum of the power consumption of the offshore data center and the total power consumption of the offshore ranch, and supplying power to the offshore ranch and the offshore data center based on a comparison result thereof.

8. The method according to claim 7, wherein the step of comparing the amount of heat supply required by the offshore ranch with the amount of surplus heat generated by the offshore data center, and determining a total power consumption of the offshore ranch based on a comparison result thereof comprises:

if the amount of heat supply required by the offshore ranch is greater than or equal to the amount of surplus heat generated by the offshore data center, calculating the total power consumption of the offshore ranch based on the power consumption of equipment of the offshore ranch, the amount of heat supply required by the offshore ranch and the amount of surplus heat generated by the offshore data center;
or, if the amount of heat supply required by the offshore ranch is less than the amount of surplus heat generated by the offshore data center, taking the power consumption of equipment of the offshore ranch as the total power consumption of the offshore ranch.

9. The method according to claim 8, wherein the step of comparing the amount of heat supply required by the offshore ranch with the amount of surplus heat generated by the offshore data center, and determining a total power consumption of the offshore ranch based on a comparison result thereof further comprises:
if the amount of heat supply required by the offshore ranch is less than the amount of surplus heat generated by the offshore data center, providing heat to the offshore ranch by the offshore data center, and storing the surplus heat generated by the offshore data center into an energy storage device.

10. The method according to claim 7, wherein the step of supplying power to the offshore ranch and the offshore data center based on a comparison result thereof comprises:

if the wind power generated by the offshore wind turbine is greater than or equal to a sum of the power consumption of the offshore data center and the total power consumption of the offshore ranch, supplying power to the offshore data center and the offshore ranch by the offshore wind turbine, and calculating an amount of surplus power based on the wind power generated by the offshore wind turbine and the sum of the power consumption of the offshore data center and the total power consumption of the offshore ranch, and transmitting the surplus power to the shore station through the offshore platform;
or, if the wind power generated by the offshore wind turbine is less than the sum of the power consumption of the offshore data center and the total power consumption of the offshore ranch, supplying power to the offshore data center and the offshore ranch by the shore station through the offshore platform.

Fig. 1

Fig. 2

Fig. 3

acquiring a wind power of an offshore wind turbine, a power consumption of equipment of an offshore ranch, an amount of heat supply required by the offshore ranch, a power consumption of an offshore data center and a surplus heat coefficient of the offshore data center — S401

calculating an amount of surplus heat generated by the offshore data center based on the power consumption of the offshore data center and the surplus heat coefficient of the offshore data center — S402

comparing the amount of heat supply required by the offshore ranch with the amount of surplus heat generated by the offshore data center, and determining a total power consumption of the offshore ranch based on a comparison result thereof — S403

comparing the wind power of the offshore wind turbine with a sum of the power consumption of the offshore data center and the total power consumption of the offshore ranch, and supplying power to the offshore ranch and the offshore data center based on a comparison result thereof — S404

Fig. 4

acquiring a wind power of an offshore wind turbine, a power consumption of equipment of an offshore ranch, an amount of heat supply required by the offshore ranch, a power consumption of an offshore data center and a surplus heat coefficient of the offshore data center — S501

calculating an amount of surplus heat generated by the offshore data center based on the power consumption of the offshore data center and the surplus heat coefficient of the offshore data center — S502

if the amount of heat supply required by the offshore ranch is greater than or equal to the amount of surplus heat generated by the offshore data center, calculating the total power consumption of the offshore ranch based on the power consumption of equipment of the offshore ranch, the amount of heat supply required by the offshore ranch and the amount of surplus heat generated by the offshore data center — S5031

or, if the amount of heat supply required by the offshore ranch is less than the amount of surplus heat generated by the offshore data center, taking the power consumption of equipment of the offshore ranch as the total power consumption of the offshore ranch — S5032

S503

if the wind power generated by the offshore wind turbine is greater than or equal to a sum of the power consumption of the offshore data center and the total power consumption of the offshore ranch, supplying power to the offshore data center and the offshore ranch by the offshore wind turbine, and calculating an amount of surplus power based on the wind power generated by the offshore wind turbine and the sum of the power consumption of the offshore data center and the total power consumption of the offshore ranch, and transmitting the surplus power to the shore station through the offshore platform — S5041

or, if the wind power generated by the offshore wind turbine is less than the sum of the power consumption of the offshore data center and the total power consumption of the offshore ranch, supplying power to the offshore data center and the offshore ranch by the shore station through the offshore platform — S5042

S504

Fig. 5

acquire $P_{wind}$, $P_{DC}$, $P_{randev}$, $Q_{ranch}$, $m_{DC}$

compare $Q_{ranch}$ and $m_{DC} \times P_{DC}$

$Q_{ranch} \geq m_{DC} \times P_{DC}$

the output power is used to supplement the heat supply required by the offshore ranch, and the total power consumption of the offshore ranch is the power consumption of equipment of the offshore ranch plus the power consumption required for supplementing the heat supply .that is: $P_{ranch} = P_{randev} + Q_{ranch} - m_{DC} \times P_{DC}$

$Q_{ranch} < m_{DC} \times P_{DC}$

then directly discharge the surplus heat, the total power consumption of offshore ranch equals to the power consumption of equipment of the offshore ranch, that is $P_{ranch} = P_{randev}$

compare $P_{wind}$ and $P_{DC} + P_{ranch}$

$P_{wind} \geq P_{DC} + P_{ranch}$

surplus power $P_{wind} - (P_{DC} + P_{ranch})$ is transmitted to the shore station through the offshore platform

$P_{wind} < P_{DC} + P_{ranch}$

the onshore power grid of the shore station supplies supplemental power through the offshore platform, and if the shore station cannot supply power, the supplemental power is supplied by the power generation source, the amount of supplemental power supplied is $P_{DC} + P_{ranch} - P_{wind}$

Fig. 6

## INTERNATIONAL SEARCH REPORT

| International application No. |
| --- |
| **PCT/CN2024/110613** |

### A. CLASSIFICATION OF SUBJECT MATTER

F03D9/25(2016.01)i; F03D9/18(2016.01)i

According to International Patent Classification (IPC) or to both national classification and IPC

### B. FIELDS SEARCHED

Minimum documentation searched (classification system followed by classification symbols)

IPC: F03D

Documentation searched other than minimum documentation to the extent that such documents are included in the fields searched

Electronic data base consulted during the international search (name of data base and, where practicable, search terms used)

CNABS; CNTXT; CNKI; ENTXT; USTXT; WOTXT; VEN; VCN; DWPI: 风电, 风力, 发电, 海上, 海洋, 缆, 牧场, 养殖, 饲养, 农场, 余热, 热量, 富余, 废热, 数据, wind, power, sea, ocean, data, platform, cable? , heat, residual, pasture, farm+

### C. DOCUMENTS CONSIDERED TO BE RELEVANT

| Category* | Citation of document, with indication, where appropriate, of the relevant passages | Relevant to claim No. |
| --- | --- | --- |
| PX | CN 118327894 A (CHINA THREE GORGES CORP.) 12 July 2024 (2024-07-12) claims 1-10 | 1-10 |
| Y | CN 117941639 A (SOUTH CHINA UNIVERSITY OF TECHNOLOGY) 30 April 2024 (2024-04-30) description, paragraphs [0090]-[0170], and figures 1-6 | 1-10 |
| Y | CN 117335424 A (SHENZHEN HAILAN CLOUD DATA CENTER TECHNOLOGY CO., LTD.) 02 January 2024 (2024-01-02) description, paragraphs [0042]-[0068], and figures 1-6 | 1-10 |
| Y | CN 111615296 A (LIU PENG) 01 September 2020 (2020-09-01) description, paragraphs [0004]-[0032], and figure 1 | 1-10 |
| Y | CN 110905660 A (SHANGHAI SPACEFLIGHT SMART ENERGY TECHNOLOGY CO., LTD.) 24 March 2020 (2020-03-24) description, paragraphs [0014]-[0017], and figure 1 | 1-10 |
| Y | KR 102601012 B1 (GAON) 10 November 2023 (2023-11-10) description, paragraphs [0017]-[0056], and figures 1-4 | 1-10 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 November 2024** | **10 December 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/110613**

**C.     DOCUMENTS CONSIDERED TO BE RELEVANT**

| Category* | Citation of document, with indication, where appropriate, of the relevant passages | Relevant to claim No. |
|---|---|---|
| A | CN 114885880 A (WUHAN UNIVERSITY OF TECHNOLOGY) 12 August 2022 (2022-08-12)<br>entire document | 1-10 |
| A | CN 117751878 A (SOUTHERN MARINE SCIENCE AND ENGINEERING GUANGDONG LABORATORY (ZHANJIANG)) 26 March 2024 (2024-03-26)<br>entire document | 1-10 |

Form PCT/ISA/210 (second sheet) (July 2022)

**INTERNATIONAL SEARCH REPORT**
Information on patent family members

International application No.

**PCT/CN2024/110613**

| Patent document cited in search report | | | Publication date (day/month/year) | Patent family member(s) | | | Publication date (day/month/year) |
|---|---|---|---|---|---|---|---|
| CN | 118327894 | A | 12 July 2024 | None | | | |
| CN | 117941639 | A | 30 April 2024 | None | | | |
| CN | 117335424 | A | 02 January 2024 | None | | | |
| CN | 111615296 | A | 01 September 2020 | None | | | |
| CN | 110905660 | A | 24 March 2020 | CN | 212106052 | U | 08 December 2020 |
| KR | 102601012 | B1 | 10 November 2023 | None | | | |
| CN | 114885880 | A | 12 August 2022 | None | | | |
| CN | 117751878 | A | 26 March 2024 | CN | 221769074 | U | 27 September 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410616558